# EUROPEAN PATENT SPECIFICATION

(11) **EP 2 371 248 B1**
(45) Date of publication and mention of the grant of the patent: **12.12.2012**
(21) Application number: 10380047.0
(22) Date of filing: 31.03.2010
(51) Int. Cl.: A47J 36/02

(54) **Kitchen utensil adapted for induction cooking**
Küchenutensil geeignet zum Kochen mittels Induktion
Utensile de cuisine adaptée pour cuisson par induction

(43) Date of publication of application: 05.10.2011
(73) Proprietor: Castey Domínguez, Ramon, 17003 Girona (ES)
(72) Inventor: Castey Domínguez, Ramon, 17003 Girona (ES)
(74) Representative: Gislon, Gabriele

(56) References cited:
- EP-A1- 1 479 329
- EP-A1- 1 541 072

## Description

### Technical Field

The present invention generally relates to a cooking utensil suitable for induction cooking, and more particularly to a cooking utensil suitable for cooking foods by means of induction, such as a skillet, a saucepan and similar cooking vessels that can contain foods intended to be cooked by induction, with efficient transfer of heat to the body of the vessel.

### State of the Previous Art

As is well known, for induction cooking with a cooking utensil it is necessary for at least the bottom of the utensil to be made of a ferromagnetic material for the purpose of experiencing the magnetic variations imposed by the cooker or cooking apparatus and which will have to produce the heat necessary for cooking. Nevertheless, although said ferromagnetic material is suitable for experiencing said magnetic variations which generate heat energy, it is not as suitable for optimal conduction of the heat towards the body of the cooking utensil. To that end a number of cooking utensils have emerged which overcome said drawback. Several cooking utensil proposals suitable for induction cooking generally made of a lightweight material such as aluminium are already known. Most of them are based on adding to the bottom of the cooking utensil in question a multiple bottom formed by several metallic layers, at least one plate of ferromagnetic material plus a plate of a good heat-conductive material, such as copper for example.

Document EP1952735A2, which proposes a vessel suitable for being used both on a conventional stovetop and on an induction cooktop, is known. The vessel is made of aluminium and has a plate of copper, for example, fixed to the bottom, against which a layer of ferromagnetic material is fixed. The function of said layer of copper is to act as an element for transferring heat from the ferromagnetic layer, where the heat energy is generated by induction, to the aluminium vessel.

There are many other elements with various constructive features but they coincide in that they include a plate or layer of copper under the bottom of the vessel, such as documents EP1514952A1, EP 1203553B1, US4646935A, ES2104439T3, DE4134740C1, EP1980184A1. The mentioned document EP1514952A1, the induction cooking vessel of which has a base formed by austenitic steel, copper and ferromagnetic steel, proposes replacing said triple layer with a single layer of a new material, SUS436L, which has both heat-conductive and magnetic conductive properties.

Document EP1479329A1 also proposes arranging a layer of a heat transfer material for transferring heat between the base of a vessel and a steel stiffening disc which, in this case, has holes in which the heat transfer material is forced to enter said holes by flowing under pressure, and it does not specify that said layer is made of copper.

EP1338233A1 describes a vessel suitable for induction cooking with a multi-layer bottom based on an intercalation of an intermediate layer of copper between two layers of aluminium, which layer of copper has holes, the material of the two layers of aluminium entering the holes of the layer of copper by flowing under pressure so as to fix it. The bottom also includes a lower layer of ferromagnetic steel fixed to the lower face of the lower layer of aluminium by means of pressure and heating.

On one hand, including in the base or bottom of the cooking utensils for induction cooking a plate or layer of a good heat-conductive material is known, and on the other hand, the fact that one of the plates or layers of the bottom is provided with holes and that the material of one of them is forced to enter said holes by flowing under pressure is also known.

In addition, patent EP1541072, belonging to the inventor of this patent, describes a cooking utensil in which a ferromagnetic plate is attached to the bottom of a cooking vessel by means of arranging a plurality of projections emerging from said bottom through holes of said ferromagnetic plate and deforming such holes by riveting.

### Disclosure of the Invention

The present invention proposes a cooking utensil suitable for induction cooking which provides a new constructive structuring which consists of fixing a ferromagnetic plate and a heat-conductive plate to the bottom of the cooking utensil in question by means of deforming projections emerging from said bottom, according to the technique described in the mentioned EP 1541072, but which join said two plates together.

Indeed, the present cooking utensil, such as a skillet, saucepan or other similar utensil, which is formed by a vessel with a bottom suitable for containing foods intended for cooking them and provided with at least a first perforated plate or disc of a heat-conductive material applied immediately against the lower face of the bottom of the utensil and a second plate or disc of a magnetic conductive material applied in the proximity of the inductive source, is characterized in that projecting from the lower face of the mentioned bottom of the utensil there are a series of projections, and in that the last mentioned disc has holes which match up in location and contour with the holes of the first disc and with the projections emerging from said bottom, such that said discs are joined together by the mentioned projections, and said discs, which are at least two in number, are retained against the lower face of the bottom of the cooking utensil by means of deforming each projection by way of riveting.

To implement the invention, it has been provided that the length of each mentioned projection has a first sector adjacent to the bottom of the utensil and a final sector in the proximity of the inductive source, the mentioned first sector being wider than the final sector of the same projection, such that said projection offers a step against the face of which the ferromagnetic disc is supported. The width of the holes of a series of the first disc substantially corresponds with the width of the first projection sector of a respective series of projections, and the width of the holes of a series of the last disc substantially corresponds with the width of the final projection sector of a respective series of projections.

According to a preferred embodiment of the invention, the size of projections of a certain series is different from the size of projections of the other series of the bottom of the utensil.

These and other features will now be explained in relation to the drawings described below.

### Brief Description of the Drawings

For the purpose of making easier the understanding of the proposed invention, a set of drawing sheets is attached by way of a non-limiting example, in which:
Figure 1 depicts a sectional elevational view of a cooking utensil according to the invention, illustrating a series of projections emerging from said bottom provided for the arrangement of two perforated discs, applied against the lower face of the bottom of the same utensil, and joined together by said projections;
Figure 2 illustrates a plan view of a first disc that can be added to the mentioned lower face of the bottom of the utensil;
Figure 3 depicts a plan view of a second disc that can be added to the mentioned lower face of the bottom of the mentioned cooking utensil;
Figure 4 depicts a view of the lower face of the mentioned utensil with the mentioned discs already incorporated; and
Figure 5 illustrates an enlarged detail of the marked area V in Figure 1.

### Detailed Description of a Preferred Embodiment of the Invention

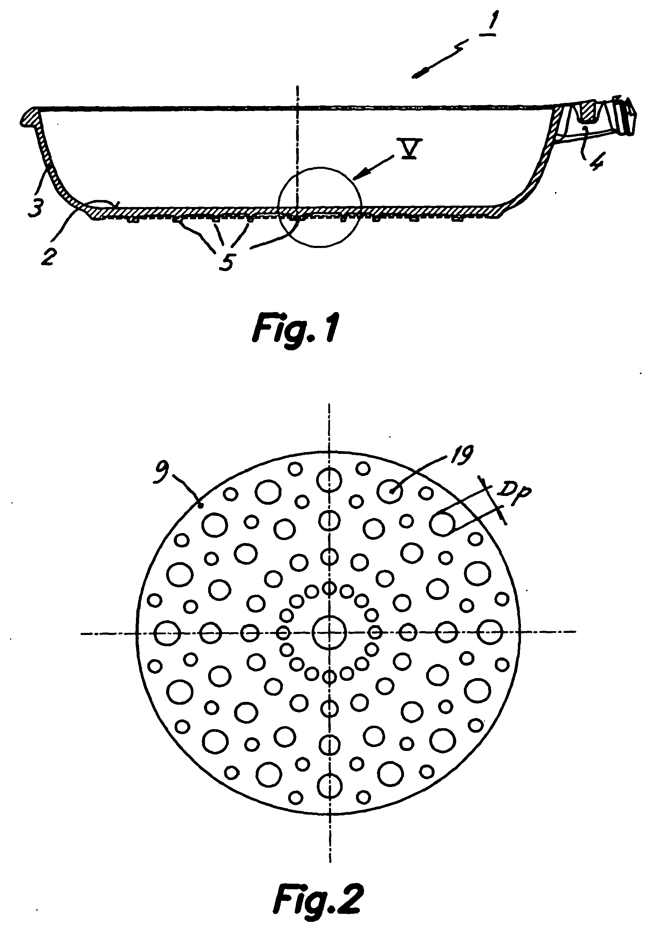

According to said Figure 1, there is shown a cooking utensil 1, such as a skillet, saucepan or the like, which has a concavity with a bottom 2, a side 3 surrounding the mentioned bottom and an appendix 4 projecting outwardly from a point of said side 3 for incorporating therein a gripping handle (not shown).

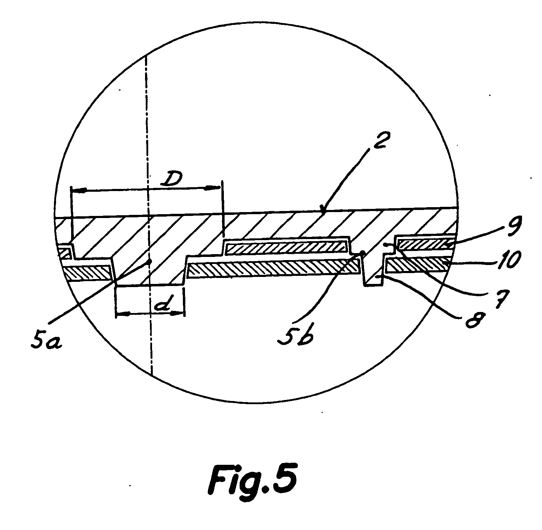

It should be pointed out that emerging from the lower face of said bottom 2 of the cooking utensil 1 there is a series 5a, 5b, 5n of lugs or short projections 5 which extend downwards in the figure, with the particularity that the length of each projection has several sectors 7, 8 having a different width, the first sector 7 adjacent to the lower face of the bottom 2 of the utensil 1 having a greater width "D" than the width "d" of the final sector 8 forming the free end of the respective projection (see the detail in Figure 5).

In addition and according to a preferred embodiment, it has been provided that the size of the projections of each series 5a, 5b, 5n is different from the size of the other series.

In the illustrated example, the mentioned projections 5 are virtually cylindrical, and more specifically they are slightly tapered, and therefore, in said case the so-called widths "D","d" correspond to diameters thereof. Nevertheless, other configurations and sections of said projections are possible, without this affecting the object of the invention.

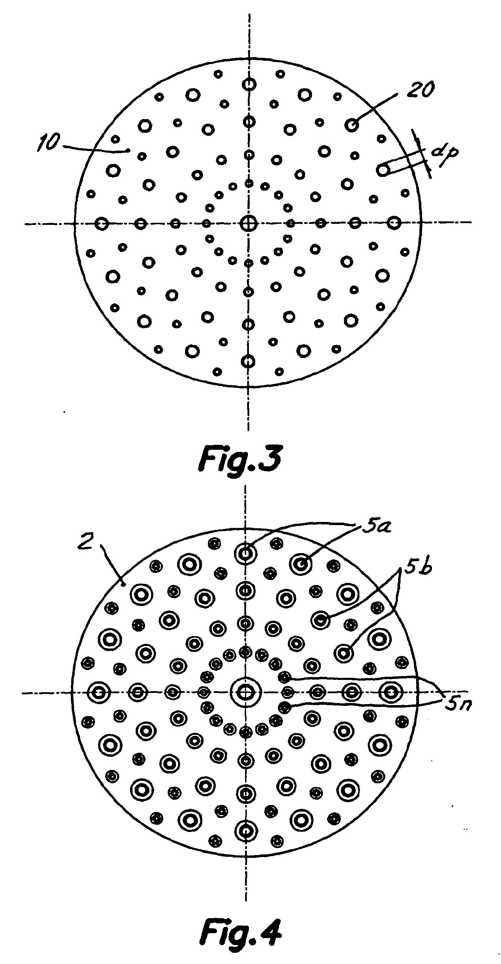

In the illustrated case, the utensil 1 preferably incorporates two discs: a first disc 9 (Figure 2) which is applied immediately against the lower face of the bottom 2 of the utensil 1 and is made of a heat-conductive material, such as copper; and a second disc 10 (Figure 3) which is applied right under said first disc 9, superimposed thereon and made of a magnetic conductive material.

Each mentioned disc 9, 10 has several series of holes having a different width, the holes 19 of one series of a disc 9 matching up in location with a corresponding series of holes 20 of the other disc 10 and matching up with a respective series of downward projections 5 of the bottom 2 of the cooking utensil 1, there being no confusion, therefore, when coupling said discs 9, 10 to the mentioned projections 5. Since the diameter "D" of holes of one series is different from the diameter "d" of holes of another corresponding series, there is not any confusion in the order of placing one disc 10 after the other disc 9 either.

Since the heat-conductive disc 9, which is illustrated in Figure 2, has wider holes, said disc 9 can be made by suitably selecting the thickness thereof such that it has a smaller mass (thereby minimally affecting the weight of the utensil as a whole) but it very efficiently contributes to the heat transfer, as is seen in the enlarged detail in Figure 5, showing the relative arrangement of the disc 9 with respect to the bottom of the vessel 2.

It must furthermore be observed (see Figure 4) that the projections 5 of each of the mentioned series 5a, 5b, 5n of projections have a different size with respect to the size of the projections of the other series. The size or diameter of a series of holes 19, 20 of the first and second disc 9, 10 will also be respectively the same as the diameter "D" and "d" of the first and second sector of said projections 5.

Figure 4 shows the appearance offered by the lower face of the bottom 2 of the utensil 1 once the mentioned discs 9, 10 have been incorporated to the bottom 2 of the same utensil.

Finally, Figure 5 depicts an enlarged detail of area V of the Figure 1, showing two projections of different series 5a, 5b.

To retain said two discs 9, 10 under the bottom 2 of the cooking utensil 1, the mentioned projections 5 will be deformed, for example by means of riveting the free end of the series of projections 5 against the lowest disc 10 added to the bottom 2 of the utensil 1. This riveting is a very simple operation but, nevertheless, it does not negatively affect the stable and secure fixing of the discs 9, 10 under the bottom 2 of the utensil in question 1.

In addition, it must be mentioned that the length of each sector 7, 8 (Figure 5) of the mentioned lugs or projections 5a, 5b, 5n could have a magnitude that is suitable for the performance of the cooking utensil by means of using two perforated plates or discs attached through the mentioned projections, according to what has been indicated.

It is understood that another additional disc or discs could be incorporated between said two discs 9, 10, making use of the easy-assembly and compactness conditions of the proposed structure.

A person skilled in the art could introduce changes and modifications in the described embodiments, without departing from the scope of the invention as it is defined in the attached claims.

## Claims

1. A cooking utensil suitable for induction cooking, such as a skillet, saucepan or other similar utensil (1) formed by a vessel with a bottom (2) suitable for containing foods intended for cooking them and provided with at least a first plate (9) with a plurality of holes (19) made of a heat-conductive material applied immediately against the lower face of the bottom (2) of the utensil (1) and a second plate (10) of a magnetic conductive material, superimposed on said first plate (9) and which, in use, is in the proximity of an inductive source, **characterized in that** said second plate (10) has holes (20) which match up in location and contour with said holes (19) of the first disc (9) and with projections (5a, 5b, 5n) emerging from said bottom (2), such that said discs (9, 10) are joined together by the mentioned projections (5), and said discs (9, 10), which are at least two in number, are retained against the lower face of the bottom (2) of the cooking utensil (1) by means of deforming each projection (5a, 5b, 5n), and **in that** said projections (5a, 5b, 5n) have two portions having a different thickness which provide a step where the contour of each hole (20) of said second plate (10) is supported.

2. The cooking utensil according to claim 1, **characterized in that** the length of each mentioned projection (5a, 5b, 5n) has a first sector (7) adjacent to the bottom (2) of the utensil (1) from where it starts and a final sector (8) in the proximity, during use, of the inductive source, the width "D" of the mentioned first sector (7) being greater than the width (d) of the final sector (8) of the same projection (5).

3. The cooking utensil according to claim 2, **characterized in that** the width (Dp) of the holes (19) of a series of holes of the first disc (9) substantially corresponds with the width (D) of the first sector (7) of the projections (5) of a respective series of projections.

4. The cooking utensil according to claim 2, **characterized in that** the width (dp) of holes (20) of a series of holes of the last disc (10) substantially corresponds with the width (d) of the final sector (8) of the projections (5) of a respective series of projections.

5. The cooking utensil according to any one of the previous claims, **characterized in that** the size of projections (5) of a certain series of projections is different from the size of projections of the other series of the bottom (2) of the utensil (1).

6. The utensil according to claim 3, **characterized in that** the sectors (7, 8) of said projections (5) have a slight tapering.

7. The utensil according to any one of the previous claims, **characterized in that** said perforated plates (9, 10) comprise respective discs having the same diameter.

## Patentansprüche

1. Kochutensil, welches zum Induktionskochen geeignet ist, wie beispielsweise eine Bratpfanne, ein Kochtopf oder ein anderes ähnliches Utensil (1), das durch ein Gefäß mit Boden (2) gebildet ist, welches zur Aufnahme von zum Kochen vorgesehenen Lebensmitteln geeignet ist, und das mit mindestens einer ersten Platte (9) aus wärmeleitendem Material mit einer Vielzahl an Löchern (19) versehen ist, die unmittelbar auf die Unterseite des Bodens (2) des Utensils (1) aufgebracht ist, sowie mit einer zweiten Platte (10) aus magnetisch leitfähigem Material, welche auf der genannten ersten Platte (9) liegt und sich in Gebrauch in der Nähe einer Induktionsquelle befindet, **dadurch gekennzeichnet, dass** die genannte zweite Platte (10) Löcher (20) besitzt, die in Bezug auf Lage und Kontur mit den genannten Löchern (19) der ersten Scheibe (9) übereinstimmen, und mit Fortsätzen (5a, 5b, 5n), die von dem genannten Boden (2) ausgehen, so dass die genannten Scheiben (9, 10) durch die erwähnten Fortsätze (5) miteinander verbunden und die genannten Scheiben (9, 10), zumindest zwei an der Zahl, an der Unterseite des Bodens (2) des Kochutensils (1) durch Verformung jedes Fortsatzes (5a, 5b, 5n) gehalten werden, und dass die genannten Fortsätze (5a, 5b, 5n) zwei Teile mit unterschiedlicher Dicke haben, welche eine Stufe bilden, an welcher die Kontur jedes Lochs (20) der genannten zweiten Platte (10) abgestützt wird.

2. Kochutensil nach Anspruch 1, **dadurch gekennzeichnet, dass** die Länge jeder der genannten Fortsätze (5a, 5b, 5n) einen ersten Abschnitt (7) hat, der dem Boden (2) des Utensils (1) benachbart ist, von dem er ausgeht, und einen Endabschnitt (8), der sich in Gebrauch in der Nähe der Induktionsquelle befindet, wobei die Breite "D" des genannten ersten Abschnitts (7) größer ist als die Breite (d) des Endabschnitts (8) desselben Fortsatzes (5).

3. Kochutensil nach Anspruch 2, **dadurch gekennzeichnet, dass** die Breite (Dp) der Löcher (19) einer Reihe an Löchern der ersten Scheibe (9) im Wesentlichen der Breite (D) des ersten Abschnitts (7) der Fortsätze (5) einer jeweiligen Reihe an Fortsätzen entspricht.

4. Kochutensil nach Anspruch 2, **dadurch gekennzeichnet, dass** die Breite (dp) der Löcher (20) einer Reihe an Löchern der letzten Scheibe (10) im Wesentlichen der Breite (d) des Endabschnitts (8) der Fortsätze (5) einer jeweiligen Reihe an Fortsätzen entspricht.

5. Kochutensil nach einem der vorherigen Ansprüche, **dadurch gekennzeichnet, dass** sich die Größe der Fortsätze (5) einer bestimmten Reihe an Fortsätzen von der Größe von Fortsätzen der anderen Reihe des Bodens (2) des Utensils (1) unterscheidet.

6. Utensil nach Anspruch 3, **dadurch gekennzeichnet, dass** die Abschnitte (7, 8) der genannten Fortsätze (5) leicht konisch verlaufen.

7. Utensil nach einem der vorherigen Ansprüche, **dadurch gekennzeichnet, dass** die genannten Lochplatten (9, 10) jeweilige Scheiben mit gleichem Durchmesser umfassen.

## Revendications

1. Un ustensile de cuisine pour la cuisson par induction, tel qu'un poêlon, une casserole ou autre ustensile semblable (1) comportant un récipient ayant un fond (2) approprié pour y contenir les aliments que l'on prétend cuire et pourvu d'au moins une première plaque (9) ayant une pluralité de trous (19) fabriquée en un matériau conducteur de la chaleur, appliquée immédiatement contre la face inférieure du fond (2) de l'ustensile (1) et une deuxième plaque (10) en un matériau conducteur magnétique, superposé sur cette première plaque (9) et qui, lorsqu'il est utilisé, est proche d'une source d'induction, **caractérisé en ce que** cette deuxième plaque (10) possède des trous (20) correspondant en place et contour avec ces trous (19) du premier disque (9) et ayant des saillies (5a,5b,5n) émergeant de ce fond (2), de sorte que ces disques (9, 10) sont joints ensembles par ces saillies (5), et ces disques (9, 10) qui sont au moins deux, sont retenus contre la face inférieure du fond (2) de l'ustensile de cuisine (1) au moyen de la déformation de chaque saillie (5a, 5b, 5n) et **en ce que** ces projections (5a, 5b, 5n) ont deux portions dont les épaisseurs sont différentes qui offrent un gradin sur lequel est supporté le contour de chaque trou (20) de cette deuxième plaque (10).

2. L'ustensile de cuisine conformément à la revendication 1, **caractérisé en ce que** la section de chacune de ces saillies (5a, 5b, 5n) possède un premier secteur (7) adjacent au fond (2) de l'ustensile (1) d'où il part et un secteur final (8) à proximité, durant l'utilisation, de la source d'induction , la largeur "D" de ce premier secteur (7) étant plus grande que la largeur (d) du secteur final (8) de la même saillie (5).

3. L'ustensile de cuisine conformément à la revendication 2, **caractérisé en ce que** la largeur (Dp) des trous (19) d'une série de trous du premier disque (9) correspond sensiblement à la largeur (D) du premier secteur (7) des saillies (5) des séries de saillies respectives.

4. L'ustensile de cuisine conformément à la revendication 2, **caractérisé en ce que** la largeur (dp) des trous (20) d'une série de trous du dernier disque (10) correspond sensiblement à la largeur (d) du secteur final (8) des saillies (5) d'une série de saillies respective.

5. L'ustensile de cuisine conformément à une quelconque des revendications précédentes, **caractérisé en ce que** la taille des saillies (5) d'une certaine série de saillies est différente de la taille des saillies de l'autre série du fond (2) de l'ustensile (1).

6. L'ustensile conformément à la revendication 3, **caractérisé en ce que** les secteurs (7, 8) de ces saillies (5) sont légèrement effilés

7. L'ustensile conformément à une quelconque des revendications précédentes, **caractérisé en ce que** ces plaques perforées (9, 10) comportent des disques respectifs ayant le même diamètre.
